# EUROPÄISCHE PATENTSCHRIFT

(11) **EP 1 789 228 B1**
(45) Veröffentlichungstag und Bekanntmachung des Hinweises auf die Patenterteilung: **17.04.2013**
(21) Anmeldenummer: 05777542.1
(22) Anmeldetag: 23.08.2005
(51) Int. Cl.: B23P 11/00, B23P 11/02, F16D 1/072, F16B 4/00

(54) **VERFAHREN ZUR AUSGESTALTUNG EINES VERBINDUNGSELEMENTES UND VERBINDUNGSELEMENT**
METHOD FOR THE CONFIGURATION OF A CONNECTING ELEMENT AND CONNECTING ELEMENT
PROCÉDÉ POUR LA CONFIGURATION D'UN ÉLÉMENT DE LIAISON ET ÉLÉMENT DE LIAISON

(30) Priorität: 13.09.2004 AT 15342004
(43) Veröffentlichungstag der Anmeldung: 30.05.2007
(73) Patentinhaber: Siemens VAI Metals Technologies GmbH, 4031 Linz (AT)
(72) Erfinder: MAYRHOFER, Karl, A-4312 Ried/Riedmark (AT); GRUBER, Rudorf, A-4201 Gramastetten (AT)
(74) Vertreter: Maier, Daniel Oliver
(86) Internationale Anmeldenummer: PCT/EP2005/009081
(87) Internationale Veröffentlichungsnummer: WO 2006/029691

(56) Entgegenhaltungen:
- EP-A- 0 365 253
- DE-A1- 2 710 006
- DE-C- 608 582
- US-A- 2 840 399
- US-A- 3 273 920
- US-A- 4 874 674
- US-A- 5 029 400
- US-A- 5 088 345
- US-A1- 2003 057 052
- G. NIEMANN: "MASCHINENELEMENTE- BAND I" 1981, SPRINGER-VERLAG , HEIDELBERG DE , XP002358948 Seite 73 - Seite 75; Abbildung 3/28; Tabellen 3/6,3/7
- PATENT ABSTRACTS OF JAPAN Bd. 018, Nr. 142 (P-1706), 9. März 1994 (1994-03-09) -& JP 05 322674 A (MATSUSHITA ELECTRIC IND CO LTD), 7. Dezember 1993 (1993-12-07)
- PATENT ABSTRACTS OF JAPAN Bd. 009, Nr. 176 (M-398), 20. Juli 1985 (1985-07-20) -& JP 60 046832 A (KIYOUWA SEIKOU KK), 13. März 1985 (1985-03-13)
- PATENT ABSTRACTS OF JAPAN Bd. 007, Nr. 169 (M-231), 26. Juli 1983 (1983-07-26) -& JP 58 074811 A (TOKYO SHIBAURA DENKI KK), 6. Mai 1983 (1983-05-06)
- PATENT ABSTRACTS OF JAPAN Bd. 1997, Nr. 06, 30. Juni 1997 (1997-06-30) -& JP 09 042303 A (NTN CORP), 10. Februar 1997 (1997-02-10)

## Beschreibung

Die Erfindung betrifft ein Verfahren zur Ausgestaltung einer Kontaktfläche und einer Gegenkontaktfläche eines Verbindungselementes, welches aus mindestens zwei Bauteilen zum Überleiten einer Drucklast von einem ersten Bauteil in mindestens einen zweiten Bauteil besteht. Weiters betrifft die Erfindung ein Verbindungselement unter Anwendung des erfindungsgemäßen Verfahrens, welches aus zwei Bauteilen zur Überleitung einer Drucklast von einem ersten Bauteil in einen zweiten Bauteil besteht, wobei der erste Bauteil eine Kontaktfläche aufweist, die an einer Gegenkontaktfläche des zweiten Bauteiles anliegt.

Die Schrift G.NIEMANN: "Machinenelemente- Band I" 1981, Springer-Verlag, Heidelberg, DE CSeite 73, Abbildung: 3/28) offenbart ein Verfahren und ein Verbindungselement gemäss den Oberbegriffen der Ansprüche 1 und 14

Verbindungselemente der erfindungsgemäßen Art sind zum Überleiten einer Kraft, beispielsweise einer Abstützkraft, oder eines Momentes, insbesondere eines Drehmomentes, von einem ersten Bauteil auf einen zweiten Bauteil besonders geeignet. Nach einer möglichen Ausführungsform handelt es sich hierbei um eine Welle-Nabe-Verbindung, wobei die Nabe mit einem Presssitz oder mit einem Schrumpfsitz auf der Welle befestigt ist. Nach einer weiteren Ausführungsform handelt es sich bei dem einem Bauteil um ein Druck ausübendes Bauteil, beispielsweise einen Druckstempel, eine Druckschraube oder um die Kolbenstange eines Druckmittelzylinders und beim weiteren Bauteil um ein Stützelement, beispielsweise einem Rahmen oder einem ähnlichen Bauteil, welches der aufgebrachten Kraft entgegenwirkt. In einem Walzgerüst kann der erste Bauteil beispielsweise von einem Walzgerüstständer und der zweite Bauteil beispielsweise von einer am Walzgerüstständer abgestützten Gewindemutter mit Gewindespindel gebildet sein.

Speziell für Welle-Nabe-Verbindungen ist aus der Praxis von Schadensfällen und aus experimentellen Versuchen bekannt, dass die Spannungs- und Pressungsverteilung in der Pressverbindung markante Spannungsspitzen aufweist und die Pressungen speziell in der Nähe der Stirnflächen einer Pressverbindung wesentlich größer sind, als im mittleren Bereich der Trennfuge. Diese Pressungen führen zu Schädigungen in diesen Randbereichen, die im Weiteren zu plastischen Verformungen und zu Rissbildungen und in extremen Fällen zu Dauerbrüchen an den Bauteilen führen. Ursache für diese schädigenden Spannungsspitzen sind geringfügige Fertigungsfehler und elastische Verformungen unter Betriebsbelastung. Im Fachbuch von Franz G. Kollmann; Welle-Nabe-Verbindung Gestaltung, Auslegung, Auswahl", Springer Verlag 1984, S. 50-59 und 72-80, wird auf diese örtlich eng begrenzten Abweichungen im Fugendruck und die zusätzlichen Spannungsspitzen an den Kanten hingewiesen und für eine Vielzahl von Ausbildungsformen einer Welle-Nabe-Verbindung wird der Einfluss der Gestaltung auf den Fugendruck angegeben. Die daraus resultierenden Gestaltungsrichtlinien sind außerordentlich vielschichtig. Neben Vorschlägen hinsichtlich der Rautiefe, sowie der Form und Lagetoleranzen nach DIN Normung, bezieht sich ein Vorschlag auf die Ausbildung eines Wellenabsatzes mit einem vorbestimmten Übergangsradius. Jedoch auch dieser Gestaltungsvorschlag ist nicht generell gültig.

Aufgabe der vorliegenden Erfindung ist es daher, die beschriebenen Nachteile bekannter Verbindungselemente zu vermeiden und ein Verfahren zur Ausgestaltung einer Kontaktfläche und einer Gegenkontaktfläche eines Verbindungselementes vorzuschlagen, bei der die Pressungsbelastung weitgehend konstant gehalten werden kann und insbesondere Spannungsspitzen in den Randbereichen der Kontaktflächen weitgehend vermieden werden. Eine weitere Aufgabe besteht darin, die Dauerstandfestigkeit des Verbindungselementes wesentlich zu erhöhen und Dauerbrüche gesichert zu vermeiden.

Diese Aufgabe wird durch die Merkmale der unabhängigen Ansprüche 1 und 14 gelöst. Vorteilhafte Ausgestaltunge des Verfahrens und des Verbindungselements sind in den Unteransprüchen dargestellt.

Diese Aufgabe wird ausgehend von einem Verfahren der eingangs genannten Art dadurch gelöst, dass ein Überdeckungsbereich einer geometrischen Stützfläche eines ersten Bauteiles und einer geometrischen Stützfläche eines zweiten Bauteiles als Kontaktfläche des ersten Bauteiles und als Gegenkontaktfläche des zweiten Bauteiles in ihrer geometrischen Ausdehnung definiert werden, wobei die Kontaktfläche und die Gegenkontaktfläche einander vollständig überdecken, dass ausgehend von den Grenzen der definierten Kontaktfläche und Gegenkontaktfläche Freistellungen ausgebildet werden, wobei die die Kontaktfläche und die Gegenkontaktfläche überragende Bereiche der Stützflächen des ersten und des zweiten Bauteiles von der Kontaktfläche und der Gegenkontaktfläche räumlich abgesetzt werden.

Unter Stützfläche des ersten und zweiten Bauteiles sind die kantenfrei durchgehenden, ebenen oder räumlich gekrümmten Flächen der beiden gegeneinander zu pressenden Bauteile zu verstehen, die die Kontaktfläche des ersten Bauteiles und die Gegenkontaktfläche des zweiten Bauteiles umfassen, bevor sie nach dem erfindungsgemäßen Verfahren ausgebildet bzw. abgegrenzt werden. Jede der Stützflächen kann in ihrer geometrischen Ausdehnung in Teilbereichen bereits den Kontaktflächen entsprechen, wobei eine der beiden Stützflächen auch zur Gänze der definierten Kontaktfläche entsprechen kann. Mit der Abgrenzung zweier ebener oder räumlich gekrümmter Kontaktflächen innerhalb des Überdeckungsbereiches der gegenüberliegenden Stützflächen werden die Flächen bestimmt, die später die Kraft- oder Momentenübertragung sicherstellen müssen. Jede diese Kontaktflächen wird gegenüber den überragenden Teilen der Stützfläche durch Freistellungen abgegrenzt, die in bevorzugter Weise ausgebildet sind. An allen Rändern (Kanten) der Kontaktfläche und der Gegenkontaktfläche werden Freistellung vorgenommen, d.h. Freistellflächen ausgebildet, und damit sichergestellt, dass Spannungsspitzen wesentlich reduziert oder überhaupt vermieden werden.

Die an der Kontaktfläche und der Gegenkontaktfläche anschließenden Freistellungen werden von Freistellflächen gebildet, die an der Berührungslinie mit der Kontaktfläche und der Gegenkontaktfläche jeweils etwa normal zu dieser verlaufen und zur verbleibenden Stützfläche eine Kerbe bilden. Diese Kerbe ist hierbei im Sinne einer Ausrundung zu verstehen. Die Freistellflächen grenzen die Kontaktfläche und Gegenkontaktfläche zur Gänze gegen weitere Flächen der beiden Bauteile ab und bilden solcherart einen geschlossenen Ringbereich um die Kontaktfläche bzw. Gegenkontaktfläche. Da die Freistellflächen an der Berührungslinie mit der jeweiligen Kontaktfläche im Wesentlichen normal zu dieser ausgerichtet wird, bilden die beiden an der Kontaktfläche und der Gegenkontaktfläche anschließenden Freistellflächen eine einheitlich räumlich gekrümmte Freistellfläche. Mit der vom Kontaktrand normal zur Kontaktfläche weglaufenden Freistellfläche wird das vorliegende singuläre Spannungskonzentrationsproblem an den Kontakträndern gelöst und auf ein mit normaler Berechnungssoftware optimierbares Kerbspannungsproblem der Freistellfläche reduziert.

Zweckmäßig wird die Freistellung bzw. Freistellfläche mit einer Kontur ausgebildet, die im Querschnitt annähernd einem Abschnitt einer Ellipse oder einen Korbbogen bildet. Im Gegensatz zu einer Freistellfläche die auf einem festgelegten Ausrundungsradius basiert, wird durch die vorgeschlagenen Kurvenverläufe ein zumindest schrittweiser abnehmender und anschließend wieder zunehmender Radiusverlauf in der Freistellfläche erreicht. Dadurch wird ebenfalls ein Beitrag zur Minimierung von Spannungsspitzen in den Bauteilen erreicht.

Unter Berücksichtigung wirtschaftlicher fertigungstechnischer Möglichkeiten wird die durch zeitgemäße Optimierungssoftware gefundene allgemeine Kerbform der Freistellfläche durch eine Folge von Kerbbögen und Geraden zweckdienlich approximiert.

Bei einem Verbindungselement, welches aus drei Bauteilen besteht und eine Kraft- oder Momentenübertragung zwischen einem ersten Bauteil und den zwei weiteren Bauteilen stattfindet und bei welchem die drei Bauteile so zusammengefügt sind, dass sie einander entlang einer geraden oder gekrümmten Kontaktlinie berühren, treten insbesondere im Umgebungsbereich dieser Kontaktlinie große Druck- und Zugspannungsspitzen in den Bauteilen auf. In diesen Fällen kann eine wesentliche Vergleichmäßigung der Spannungsverhältnisse erzielt werden, wenn entlang der gemeinsamen Kontaktlinie Freistellflächen ausgebildet werden, die einen geschlossenen torusförmigen Ringraum bei gekrümmter Kontaktlinie oder einem im Querschnitt geschlossenen Freistellkanal bei einer geraden Kontaktlinie bilden, der in seiner Längserstreckung die Kontaktlinie umschließt.

Eine weitere Vergleichmäßigung der Belastungen der zusammenwirkenden Bauteile an der Kontaktfläche und Gegenkontaktfläche wird erreicht, indem mindestens eine der Kontaktfläche oder Gegenkontaktfläche mit einer Bombierung versehen wird. Je nach Belastungsfall und Notwendigkeit erstreckt sich die Bombierung über die gesamte Kontaktfläche oder Gegenkontaktfläche oder aber auch nur über einen Teilbereich einer dieser beiden Kontaktflächen.

Weitere in Hinblick auf eine Spannungsvergleichmäßigung vorteilhafte Ausbildungen der Bombierungen an der Kontaktfläche oder der Gegenkontaktfläche werden erreicht, wenn die Kontur der Bombierung der Kontaktfläche oder der Gegenkontaktfläche in mindestens einem Querschnitt mit einer zumindest abschnittweise konvexen und stetig differenzierbaren Kurve ausgeformt wird.

Eine weitere Möglichkeit, die Spannungsverteilung günstig zu beeinflussen, besteht darin, dass die Kontur der Bombierung der Kontaktfläche oder Gegenkontaktfläche in mindestens einem Querschnitt aus mindestens zwei stetig differenzierbaren Kurvenabschnitten gebildet wird, von denen zumindest ein Kurvenabschnitt mit einem konvexen Kurvenverlauf ausgestattet wird und im Übergangspunkt benachbarter Kurvenabschnitte die stetige Differenzierbarkeit gegeben ist. In einer Weiterbildung dieser Ausführungsform wird die Kontur der Bombierung der Kontaktfläche oder Gegenkontaktfläche von drei Kurvenabschnitten gebildet, wobei der mittlere Kurvenabschnitt von einer Geraden und die benachbarten Kurvenabschnitte von konvex gekrümmten Kurven gebildet werden.

Gleichermaßen ist es zur Erzielung einer gleichmäßigen Spannungsverteilung zweckmäßig, wenn die Kontur der Bombierung der Kontaktfläche oder Gegenkontaktfläche in mindestens einem Querschnitt mit einer Kurve mit doppelkonvexen, vorzugsweise symmetrischen Verlauf ausgestaltet wird.

Zur Übertragung von Drehmomenten bilden der erste Bauteil mit der Kontaktfläche und der zweiten Bauteil mit der Gegenkontaktfläche eine Schrumpfverbindung. Bevorzugte Anwendungsfälle hierfür sind Welle-Nabe-Verbindungen, wobei der erste Bauteil von einer antreibbaren Welle und der zweite Bauteil von einem Drehmomente übertragenden Element, wie Zahnrad, Reibrad, Antriebsrad oder ähnlichem, gebildet wird.

Bei einem speziellen Anwendungsfall aus der Walzwerkstechnik wird der erste Bauteil von einem Walzgerüstständer mit einer im Querhaupt mittig angeordneten Sacklochbohrung und der zweite Bauteil von einer in der Sacklochbohrung axial abgestützten Gewindemutter mit Gewindespindel gebildet.

Unter Anwendung des erfindungsgemäßen Verfahrens umfasst die vorliegende Erfindung ein Verbindungselement bestehend aus mindestens zwei Bauteilen zum Überleiten einer Drucklast von einem ersten Bauteil in mindestens einen zweiten Bauteil, wobei der erste Bauteil eine Kontaktfläche aufweist, die an einer Gegenkontaktfläche des zweiten Bauteiles anliegt. Dieses Verbindungselement ist dadurch gekennzeichnet, dass die Kontaktfläche und die Gegenkontaktfläche einander vollständig überdecken und an allen Rändern der Kontaktfläche und der Gegenkontaktfläche Freistellungen oder Freistellflächen ansetzen. Vorzugsweise weist mindestens eine der Kontaktfläche oder Gegenkontaktfläche eine Bombierung auf, die sich über den gesamten Bereich einer der Kontaktflächen oder über zumindest einen Teilbereich einer Kontaktfläche erstreckt. Bombierungen an beiden einander gegenüber liegenden und im Betriebszustand gegeneinander gepressten Kontaktflächen der beiden Bauteile sind ebenfalls möglich.

Die Freistellungen an der Kontaktfläche und der Gegenkontaktflächen sind von Freistellflächen gebildet, die an der Berührungslinie mit der Kontaktfläche und der Gegenkontaktfläche jeweils etwa normal zu dieser stehen und bei räumlich gekrümmten Freistellflächen Kerben bilden. Die Kerben sind in besonderer Weise mit einer Kontur versehen, um eine Spannungsspitzenminimierung sicherzustellen. Dementsprechend weisen die Freistellungen, bzw. Freistellflächen eine Kontur auf, die in einem Querschnitt annähernd von einem Abschnitt einer Ellipse oder von einem Korbbogen gebildet ist.

Bei einem von drei Bauteilen bestehenden Verbindungselement, bei dem die Bauteile einander entlang einer gemeinsamen Kontaktlinie berühren, sind Freistellflächen angeordnet, die einen geschlossenen torusförmigen Ringraum oder einen im Querschnitt geschlossenen Freistellkanal bilden, der in seiner Längserstreckung die Kontaktlinie umschließt. Die Querschnittskontur des torusförmigen Ringraumes oder des im Querschnitt geschlossenen Freistellkanals ist von gekrümmten Linien gebildet.

Die Kontur der Bombierung der Kontaktfläche oder Gegenkontaktfläche ist in mindestens einem Querschnitt von einer zumindest abschnittsweise konvexen und stetig differenzierbaren Kurve gebildet. Alternativ kann die Kontur der Bombierung der Kontaktfläche oder Gegenkontaktfläche in mindestens einem Querschnitt aus mindestens zwei stetig differenzierbaren Kurvenabschnitten gebildet sein, von denen zumindest ein Kurvenabschnitt einen konvexen Kurvenverlauf aufweist und im Übergangspunkt benachbarter Kurvenabschnitte die stetige Differenzierbarkeit gegeben ist. Weiters kann die Kontur der Bombierung der Kontaktfläche oder Gegenkontaktfläche auch von drei Kurvenabschnitten gebildet sein, wobei der mittlere Kurvenabschnitt von einer Geraden und die benachbarten Kurvenabschnitte von konvex gekrümmten Kurven gebildet sind. Eine weitere mögliche Ausführungsform besteht darin, dass die Kontur der Bombierung der Kontaktfläche oder Gegenkontaktfläche in mindestens einem Querschnitt von einer Kurve mit doppelkovexem, vorzugsweise symmetrischem Verlauf gebildet ist.

Das vorgeschlagene Verbindungselement bietet auf verschiedenen Gebieten der Technik eine Vielzahl von Anwendungsmöglichkeiten.

Nach einer bevorzugten Gruppe von Anwendungsmöglichkeiten, die das Grundelement einer Welle-Nabe-Verbindung betreffen, ist der erste Bauteil von einer antreibbaren Welle, die beispielsweise an einem Motor gekuppelt ist, und der zweite Bauteil von einem Drehmomente übertragenden Element, wie einem Zahnrad, einem Reibrad, einem Antriebsrad, oder ähnlichem gebildet. Hierbei bilden der erste Bauteil mit der Kontaktfläche und der zweite Bauteil mit der Gegenkontaktfläche eine Schrumpfverbindung.

Eine weitere bevorzugte Gruppe von Anwendungsfällen beziehen sich auf die Ausbildung der Kontaktflächen eines Druckstempels und der entgegenwirkenden Stützfläche eines Stützelementes. Eine bevorzugte konkrete Ausführungsform betrifft die Grundstruktur eines Walzgerüstes. Konkret ist der erste Bauteil von einem Walzgerüstständer mit einer im Querhaupt mittig angeordneten Sacklochbohrung und der zweite Bauteil von einer in der Sacklochbohrung axial abgestützten Druckmutter mit Gewindespindel gebildet.

Weitere Vorteile und Merkmale der vorliegenden Erfindung ergeben sich aus der nachfolgenden Beschreibung nicht einschränkender Ausführungsbeispiele, wobei auf die beiliegenden Figuren Bezug genommen wird, die folgendes zeigen:
- Fig. 1a: eine verallgemeinerte Darstellung eines Verbindungselementes mit einer festgelegten Kontaktfläche und Gegenkontaktfläche,
- Fig. 1b: die erfindungsgemäße Ausgestaltung der Kontaktfläche und der Gegenkontaktfläche nach Fig. 1a,
- Fig. 1c: eine weitere erfindungsgemäße Ausgestaltung der Kontaktfläche und der Gegenkontaktflächen nach Fig. 1,
- Fig. 2a: eine erste Ausführungsform einer Welle-Nabe-Verbindung in einer Grundkonzeption,
- Fig. 2b: die erste Ausführungsform einer Welle-Nabe-Verbindung gemäß Fig. 2a mit der erfindungsgemäßen Ausgestaltung der Kontaktfläche und der Gegenkontaktfläche,
- Fig. 3a: eine zweite Ausführungsform einer Welle-Nabe-Verbindung in einer Grundkonzeption,
- Fig. 3b: die zweite Ausführungsform einer Welle-Nabe-Verbindung gemäß Fig. 3a mit der erfindungsgemäßen Ausgestaltung der Kontaktfläche und der Gegenkontaktfläche,
- Fig. 4a: eine dritte Ausführungsform einer Welle-Nabe-Verbindung in einer Grundkonzeption,
- Fig. 4b: die dritte Ausführungsform einer Welle-Nabe-Verbindung gemäß Fig. 4a mit der erfindungsgemäßen Ausgestaltung der Kontaktfläche und der Gegenkontaktfläche,
- Fig. 5a: eine vierte Ausführungsform einer Anordnung einer Druckmutter in einer Sacklochbohrung in einer Grundkonzeption,
- Fig. 5b: die vierte Ausführungsform einer Anordnung einer Druckmutter in einer Sacklochbohrung gemäß Fig. 5a mit der erfindungsgemäßen Ausgestaltung der Kontaktfläche und der Gegenkontaktfläche,
- Fig. 5c: eine Detailvergrößerung der erfindungsgemäßen Kantenausbildung der Kontaktfläche und der Gegenkontaktfläche,
- Fig. 6a: eine fünfte Ausführungsform mit einer Welle-Nabe-Verbindung mit zwei schrägverzahnten Zahnrädern in stirnseitig berührender Anordnung auf einer Welle in einer Grundkonzeption,
- Fig. 6b: die fünfte Ausführungsform mit einer Welle-Nabe-Verbindung mit zwei schrägverzahnten Zahnrädern in stirnseitig berührender Anordnung auf einer Welle mit der erfindungsgemäßen Ausgestaltung der Kontaktfläche und der Gegenkontaktfläche
- Fig. 7a: eine sechste Ausführungsform mit drei einander berührenden kraftübertragenden Bauteilen,
- Fig. 7b: die sechste Ausführungsform mit der erfindungsgemäßen Ausgestaltung der Bauteile in einer Schnittdarstellung gemäß der Linie A-A in Fig. 7a,
- Fig. 7c: die sechste Ausführungsform mit der erfindungsgemäßen Ausgestaltung der Bauteile in einer Schnittdarstellung gemäß der Linie B-B in Fig. 7a
- Fig. 8a: eine siebente Ausführungsform mit einer in axialer Richtung lösbaren Verbindung eines Walzwerksantriebes,
- Fig. 8b: die siebente Ausführungsform mit der erfindungsgemäßen Ausgestaltung der lösbaren Verbindung in einem Walzwerksantrieb in einem Teilschnitt,
- Fig. 8c: eine Innenleiste gemäß der siebenten Ausführungsform bei wechselnder Lastrichtung.

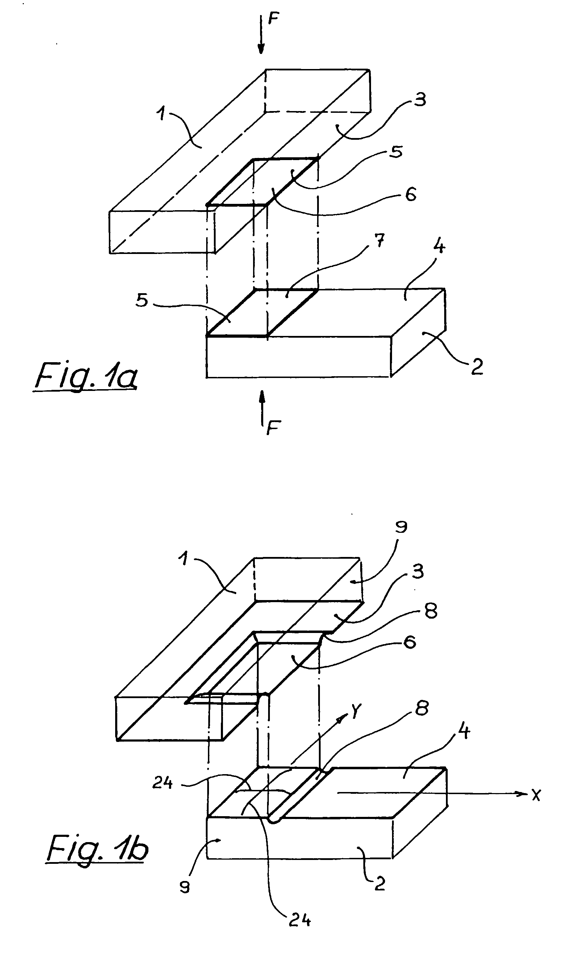

In Fig. 1a sind ein erster Bauteil 1 und ein zweiter Bauteil 2 eines nicht näher definierten Verbindungselementes als abstrakte Quaderformen angedeutet und die beiden Bauteile in vertikalem Abstand zueinander dargestellt. Gegeneinander gerichtet sind die Stützfläche 3 des ersten Bauteiles 1 und die Stützfläche 4 des zweiten Bauteiles 2, die einander bei vertikaler Betrachtung in einem Überdeckungsbereich 5 überlappen. Dieses Überdeckungsbereich wird als eine mit dicken Linien dargestellte Kontaktfläche 6 am ersten Bauteil 1 und entsprechende Gegenkontaktfläche 7 am zweiten Bauteil 2 festgelegt, wobei diese Kontaktfläche und Gegenkontaktfläche im späteren Betriebszustand unter der Einwirkung einer vertikalen Kraft F gegeneinander gepresst werden und daher so ausgebildet werden sollen, dass die Spannungsverteilung an den Kontaktflächen und im Umgebungsbereich dieser Kontaktflächen in den beiden zusammenwirkenden Bauteilen möglichst gleichmäßig erfolgt und insbesondere Spannungsspitzen in den Randbereichen der Kontaktflächen vermieden werden, die in der Praxis zwangsweise auftreten, wenn Bauteile, wie sie in Fig. 1a dargestellt sind, ohne weitere konstruktive Maßnahmen aufeinander gepresst werden.

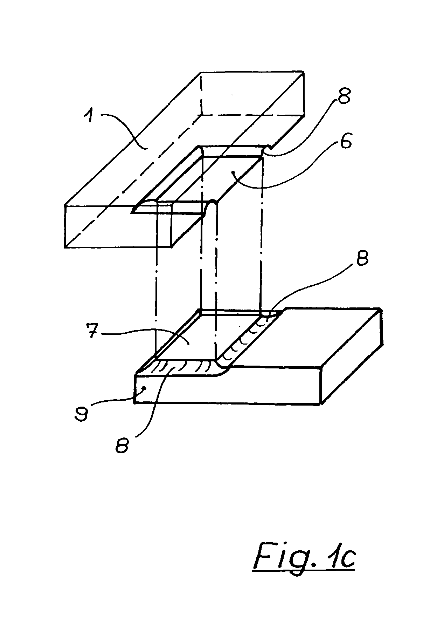

Wie in Fig. 1b dargestellt, wird eine spannungsoptimierte Ausgestaltung der Kontaktfläche 6 am Bauteil 1 und der Gegenkontaktfläche 7 am Bauteil 2 in einem ersten Schritt durch die Ausbildung von Freistellungen oder Freistellflächen 8 erreicht, mit denen die Kontaktfläche 6 und die Gegenkontaktflächen 7 gegenüber den anschließenden Bereichen der Stützfläche 3 und der Stützfläche 4 abgegrenzt wird. Die Freistellflächen 8 setzen an den Kontaktflächen 6, 7 etwa normal zu diesen an und werden rinnenförmig in die Stützfläche 3, 4 übergeleitet. Enden die Kontaktfläche 3, 4 an einer der Seitenwände 9 eines der Bauteile, so ist die Ausbildung einer speziellen Freistellfläche nicht notwendig. Es können aber, wie in Fig. 1 c dargestellt, die Kontaktfläche 6 und die Gegenkontaktfläche 7 kleiner dimensioniert werden und an der Kontaktfläche und an der Gegenkontaktfläche jeweils eine umlaufende Freistellfläche 8 eingeplant werden.

Bei allgemeiner Betrachtung einer zusammenwirkender Kontaktfläche und Gegenkontaktfläche, die sich gegenseitig überdecken, ergibt sich eine allgemeine Kontakt-Randlinie und ausgehend von dieser allgemeinen Kontakt-Randlinie beginnt die Freistellfläche mit jeder aus Geraden darstellbaren Fläche, die durch jene Normalen gebildet wird, die sich aus dem kartesischen Koordinatensystem ergibt, wenn eine Achse längs der Kontakt-Randlinie und eine Achse in der Kontaktfläche liegt.

Die Freistellflächen der zusammenwirkenden Bauteile werden mit einer zeitgemäßen Optimierungssoftware ermittelt und fertigungsgerecht durch eine Folge von Korbbögen und Geraden zweckdienlich approximiert. Die Auslegung der Freistellflächen erfolgt hierbei individuell für jeden Bauteil und berücksichtigt die örtlichen Spannungsverhältnisse.

Die in Fig. 1b dargestellte Gegenkontaktfläche 7 ist mit einer Bombierung 24 in X-Richtung und in Y-Richtung ausgehend von einem ebenen Mittenbereich jeweils zu den Rändern der Gegenkontaktfläche abfallend bombiert ausgebildet und mit dünnen Linien angedeutet. Auch diese Maßnahme trägt wesentlich zur Reduzierung von Spannungsspitzen in den Randzonen bei.

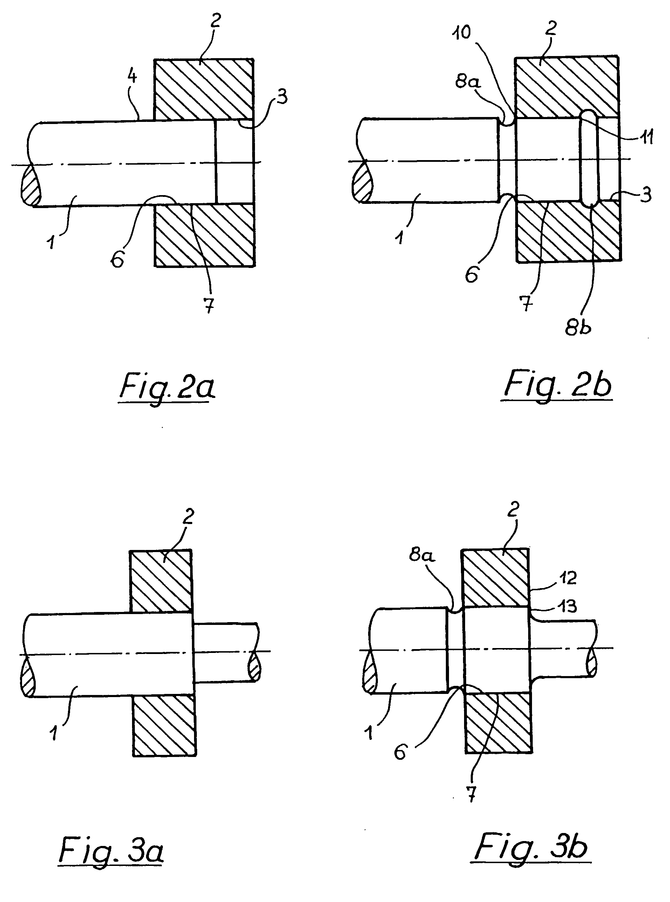

In den Figuren 2a bis 4b und 6a, 6b sind vorteilhafte Ausführungsformen für die erfindungsgemäße Ausgestaltung einer Welle-Nabe-Verbindung dargestellt, wobei die Welle dem ersten Bauteil 1 und die Nabe dem zweiten Bauteil 2 des Verbindungselementes darstellt. Welle und Nabe sind durch eine Schrumpfverbindung verbunden und speziell für die Übertragung von Drehmomenten geeignet. Mit dieser in keiner Weise einschränkenden Auswahl möglicher Verbindungen soll die erfindungsgemäße Ausgestaltung der Kontakt- und Gegenkontaktflächen näher veranschaulicht werden. In der Konzeptionsdarstellung nach Fig. 2a ist auf einem eine Welle darstellenden Bauteil 1 ein von einer Nabe gebildeten Bauteil 2 aufgeschrumpft, wobei die Nabe nur über eine Teillänge ihrer Längserstreckung mit der Welle verbunden ist. Die zylindrische Innenwand der Nabe bildet die Stützfläche 3 des Bauteils 2 und die zylindrische Mantelfläche der Welle bildet die Stützfläche 4 des Bauteils 1. Im Überdeckungsbereich der beiden Stützflächen 3, 4 werden die zusammenwirkenden Kontaktflächen 6 des Bauteiles 1 und Gegenkontaktfläche 7 des Bauteiles 2 definiert, wobei sich diese definierten Flächen zur Gänze überdecken müssen.

In Fig. 2b wird die Ausgestaltung von Freistellflächen ausgehend von den Rändern der Kontaktfläche 6 und Gegenkontaktfläche 7 dargestellt. Die Freistellflächen werden erfindungsgemäß ausgehend von den Rändern der beiden Kontaktflächen normal zu diesen ausgerichtet und bogenförmig zur jeweiligen Stützfläche 2, 3 zurückgeführt. Dementsprechend wird eine Freistellfläche 8a ausgehend von der Kante 10 als Einstich in die Welle (Bauteil 1) und eine Freistellfläche 8b ausgehend von der Kante 11 als Einstich in die Nabe (Bauteil 2) hergestellt. Die an die Kontaktfläche und Gegenkontaktfläche anschließenden vertikalen Stirnflächen des ersten und zweiten Bauteiles erfordern keine besondere Freistellung an der Kontaktfläche und Gegenkontaktfläche.

Die Konzeptionsdarstellung nach Fig. 3a zeigt eine Welle-Nabe-Verbindung, bei der ein zylindrischer Bauteil 2 (Nabe) auf einen zylindrischen Bauteil 1 (Welle) aufgeschrumpft ist und der Bauteil 2 an einem Wellenabsatz fluchtend mit der Stirnwand auf dem Wellenabschnitt mit dem größeren Durchmesser befestigt ist. Hier ist die Anordnung einer Freistellfläche 8a nach Art eines Einstiches in den Bauteil 1 im Anschluss an die definierte Kontaktfläche 6 des Bauteiles 1 notwendig. Am gegenüberliegenden Rand der Kontaktfläche 6 und Gegenkontaktfläche 7 schließen normal zu diesen Kontaktflächen ausgerichtete Stirnflächen 12, 13 an, so dass hier eine besondere Freistellung nicht notwendig ist. Allerdings wird eine Ausrundung am Wellenabsatz vorgesehen, wie dies der üblichen Konstruktionspraxis entspricht.

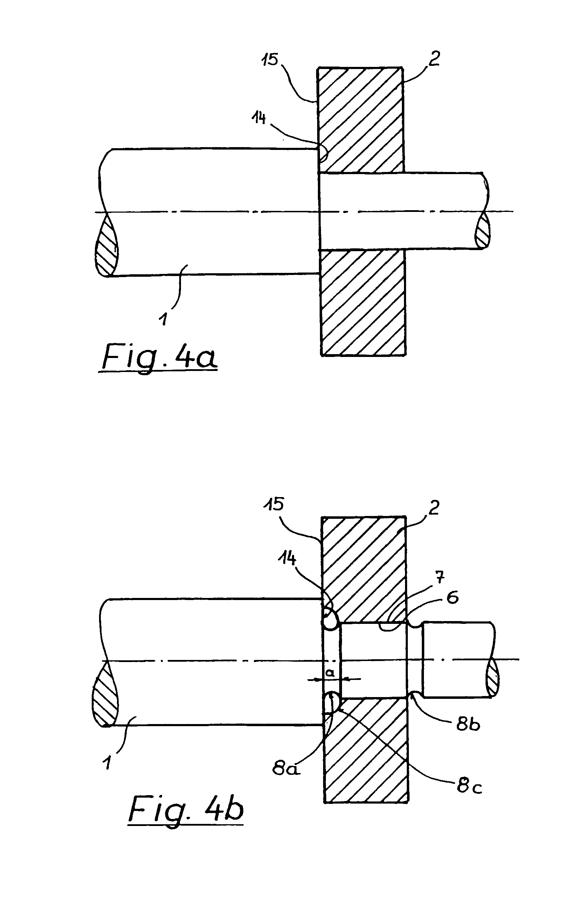

Die Konzeptionsdarstellung nach Fig. 4a zeigt wiederum eine Welle-Nabe-Verbindung, mit einer abgestuften Welle, die den Bauteil 1 bildet, und einer Nabe, die den Bauteil 2 bildet, wobei die Nabe auf dem Wellenzapfen mit dem kleineren Durchmesser aufgeschrumpft ist und an der Stirnfläche 14 der Welle anliegt. Diese Ausführungsform erfordert eine spezielle Festlegung der Kontaktfläche und Gegenkontaktfläche im Bereich des Wellenabsatzes, da durch das Anliegen der Nabe an der Stirnfläche 14 der Welle die Spannungsverhältnisse in diesem Bereich im besonderen Maße gestört werden. In Fig. 4b ist dies dargestellt. Um Raum für die Anordnung der Freistellflächen im Absatzbereich der Welle zu schaffen, beginnt die Kontaktfläche 6 und die Gegenkontaktfläche 7 erst in einem Abstand a von der Stirnfläche 14. Ausgehend von den Rändern der Kontaktfläche 6 der Welle werden torusförmige Freistellflächen 8a, 8b durch eine Eindrehung oder durch einen Einstich in die Welle gebildet, wobei die Freistellfläche 8a bogenförmig geführt in der Stirnfläche 14 übergeht. Die Freistellfläche 8c, die von der Gegenkontaktfläche 7 ausgeht ist bogenförmig ausgebildet und endet an der Stirnfläche 15 der Nabe. Insgesamt wird ein torusförmiger Freiraum im kritischen Kantenbereich geschaffen.

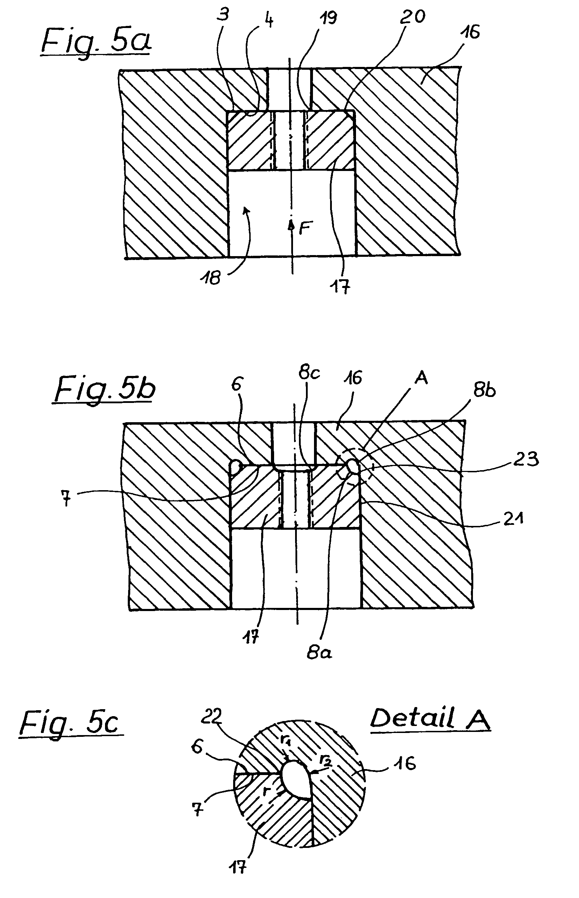

Ein weiteres in Fig. 5a in einer Konzeptionsdarstellung veranschaulichtes Ausführungsbeispiel aus der Walzwerkstechnik bezieht sich auf ein Walzgerüst, insbesondere auf die Kontaktzone des Querhauptes eines Walzgerüstständers 16 und einer Druckmutter 17, die sich in einer Sacklochbohrung 18 des Walzgerüstständers abstützt. In der Kontaktzone von Sacklochbohrung und Druckmutter wird die Walzkraft über eine Gewindespindel und die Druckmutter in den Walzgerüstständer eingeleitet. Bei der Lastdurchleitung treten üblicherweise lokal nebeneinander hohe Druck- und Zugspannungszonen auf. Durch eine optimale Ausgestaltung des Kontaktbereiches können beide Zonen eine weitgehend gleichmäßige Vergleichsspannung auf niedrigem Niveau erreichen und damit größtmögliche Sicherheit gegen Dauerbruch gewährleisten. Bei einer herkömmlichen konstruktiven Ausgestaltung, wie in Fig. 5a dargestellt, treten im Umgebungsbereich der Kanten 19 und 20 sowohl in der Druckmutter 17 als auch im Querhaupt des Walzgerüstständers 16 (im Bodenbereich der Sacklochbohrung) erhebliche Vergleichsspannungsspitzen auf, die Dauerbelastungsschäden verursachen.

Wie in Fig. 5b und in Fig. 5c vergrößert dargestellt ist, werden an der Druckmutter 17 und dem Querhaupt des Walzgerüstständers 16 an den gegenüberliegenden Stützflächen 3, 4 eine Kontaktfläche 6 und eine Gegenkontaktfläche 7 definiert, die ausreichend Raum für die Ausbildung von Freistellflächen 8a, 8b, 8c bietet. Die im Wesentlichen rotationssymmetrische Druckmutter 17 wird im Kontaktbereich der Sacklochbohrung mit einer umlaufenden torusförmigen Freistellfläche 8a ausgestattet, die ausgehend von der stirnseitigen Gegenkontaktfläche 7, normal an diese ansetzend, bogenförmig zur Seitenwand 21 verläuft. Die Kontur dieser Freistellfläche 8a entspricht einem Ausrundungsradius r. Gleichermaßen ist eine Freistellfläche 8c an der Druckmutter im Bereich der Durchgangsbohrung des Walzgerüstständers ausgebildet.

Da die Kontaktfläche 6 und die Gegenkontaktfläche 7 einander zur Gänze überdecken, setzt die Freistellfläche 8b im Querhaupt an der Kontaktfläche 6 unmittelbar an die Freistellfläche 8a anschließend an (Kante 22). Die Freistellfläche 8b erstreckt sich zumindest entlang der Kante mit der Kontaktfläche 6 normal zu dieser und verläuft bogenförmig bis zur Kante 23, wo sie wieder mit die Freistellfläche 8a zusammentrifft. Die Freistellfläche 8b ist von einem Abschnitt eines Korbbogens gebildet, der in einem ersten Bereich einen Krümmungsradius r₁ und in einem zweiten Bereich einen Krümmungsradius r₂ aufweist. Mit dieser speziellen Ausgestaltung werden die Spitzenwerte der Vergleichsspannungen, insbesondere die Zugspannungsspitzen, in Relation zu einer Ausführungsform gemäß Fig. 5a im Optimierungsbereich stark reduziert und vergleichmäßigt.

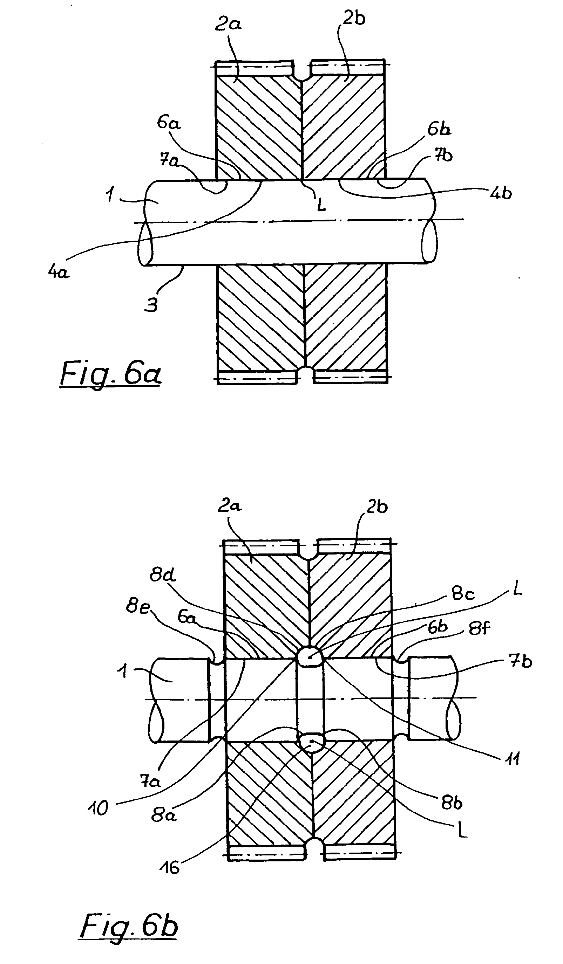

Die Konzeptionsdarstellung nach Fig. 6a zeigt eine den Bauteil 1 bildende Welle, mit einer Stützfläche 3 und mit zwei radial aufgeschrumpften Zahnrädern mit Stützflächen 4a, 4b, die die Bauteile 2a, 2b bilden, wobei die beiden Zahnräder stirnseitig eng aneinander liegend angeordnet sind. Bei dieser Ausführungsform liegt ein 3-Körper-Kontakt vor, bei dem die drei Bauteile 1, 2a, 2b mit ihren Stützflächen 3, 4a, 4b entlang einer Kontaktlinie L zusammentreffen und die Spannungsverhältnisse in diesem Bereich durch die gegenseitige Abstützung der einzelnen Bauteile besonders gestört werden. Es treten singuläre Spannungskonzentrationen am Nabenrand der Fugenflächen auf. Daher kommt, ausgehend von der Kontaktlinie L, die eine Singularität bildet, der Festlegung der Kontaktflächen 6a, 6b am Bauteil 1 und der Gegenkontaktflächen 7a, 7b an den Bauteilen 2a, 2b , sowie den notwendigen Freistellflächen an den drei Bauteilen besondere Bedeutung bei. Diese Freistellungen sind in Fig. 6b näher dargestellt. Ausgehend von den Kanten 10 und 11 der einander paarweise gegenseitig überdeckenden Kontaktflächen 6a und 7a, sowie 6b und 7b werden Freistellflächen 8a, 8b, 8c, 8d ausgebildet, die an den Kanten 10, 11 normal zu den Kontaktflächen ausgerichtet sind und einen geschlossenen torusförmigen Ringraum 16 bilden und die Singularität L einschließen. Die Freistellungen 8e, 8f an der Kontaktlinie der beiden außen liegenden Stirnflächen der Zahnräder bildenden Bauteile 2a, 2b mit der Welle sind analog zum Ausführungsbeispiel gemäß den Figuren 2b, 3b oder 4b ausgebildet.

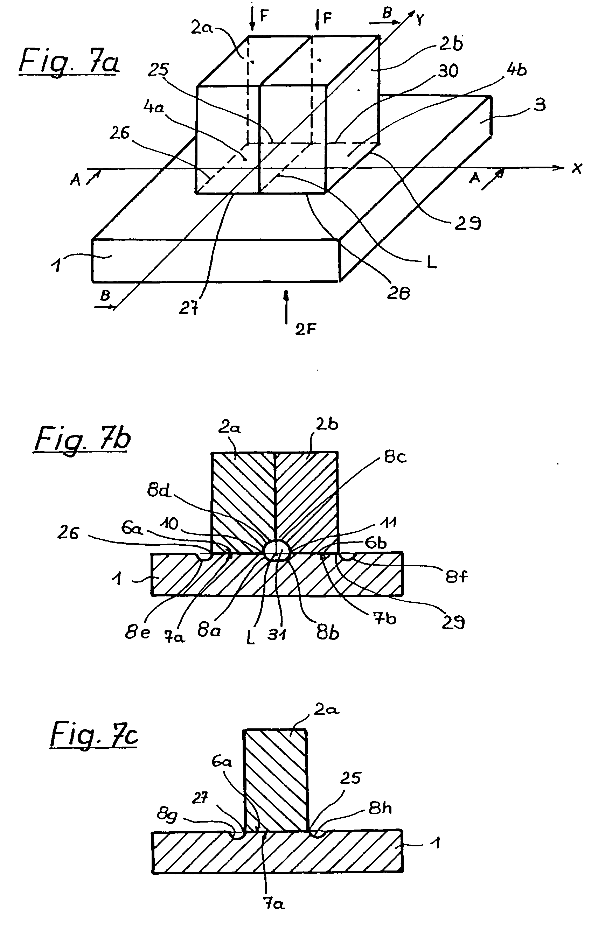

Die Konzeptionsdarstellung nach Fig. 7a zeigt an hand einer sechsten Ausführungsform das Zusammenwirken von drei Bauteilen 1, 2a, 2b, wobei auf einer Stützfläche 3 eines Bauteiles 1 zwei weitere Bauteile 2a, 2b mit ihren Stützflächen 4a, 4b abgestützt sind. Die Bauteile 2a, 2b berühren einander mit jeweils einer weiteren Seitenfläche. Die Krafteinwirkung F erfolgt normal zu den Stützflächen der Bauteile. Bei dieser Ausführungsform liegt ebenfalls ein 3-Körper-Kontakt vor, bei dem die drei Bauteile mit ihren Stützflächen entlang einer Kontaktlinie L zusammentreffen und die Spannungsverhältnisse in diesem Bereich durch die gegenseitige Abstützung der einzelnen Bauteile besonders gestört werden. Daher kommt, ausgehend von der Kontaktlinie L, die eine Singularität bildet, der Festlegung der Kontaktflächen 6a, 6b am Bauteil 1 und der Gegenkontaktflächen 7a, 7b an den Bauteilen 2a, 2b , sowie den notwendigen Freistellflächen an den drei Bauteilen besondere Bedeutung bei. Diese Freistellungen sind in den Figuren 7b und 7c teilweise näher dargestellt, wobei die Fig. 7b eine Schnittdarstellung entlang der Schnittlinie A-A in Fig. 7a und die Fig. 7c eine Schnittdarstellung entlang der Schnittlinie B-B in Fig. 7a zeigt. Ausgehend von den Kanten 10, 11 (Fig. 7b) der einander paarweise gegenseitig überdeckenden Kontaktflächen 6a und 7a, sowie 6b und 7b werden Freistellflächen 8a, 8b, 8c, 8d ausgebildet, die an den Kanten 10, 11 normal zu den Kontaktflächen ausgerichtet sind und einen im Querschnitt geschlossenen Freistellkanal 31 bilden und die Singularität L einschließen. Zusätzlich sind ausgehend von den Kanten 25, 26, 27, 28, 29, 30 Freistellflächen angeordnet, die eine geschlossene rinnenförmige Freistellung im Bauteil 1 bilden, wobei die Freistellflächen 8e, 8f, 8g, 8h dargestellt sind. Alle nicht dargestellten Freistellflächen sind analog ausgebildet.

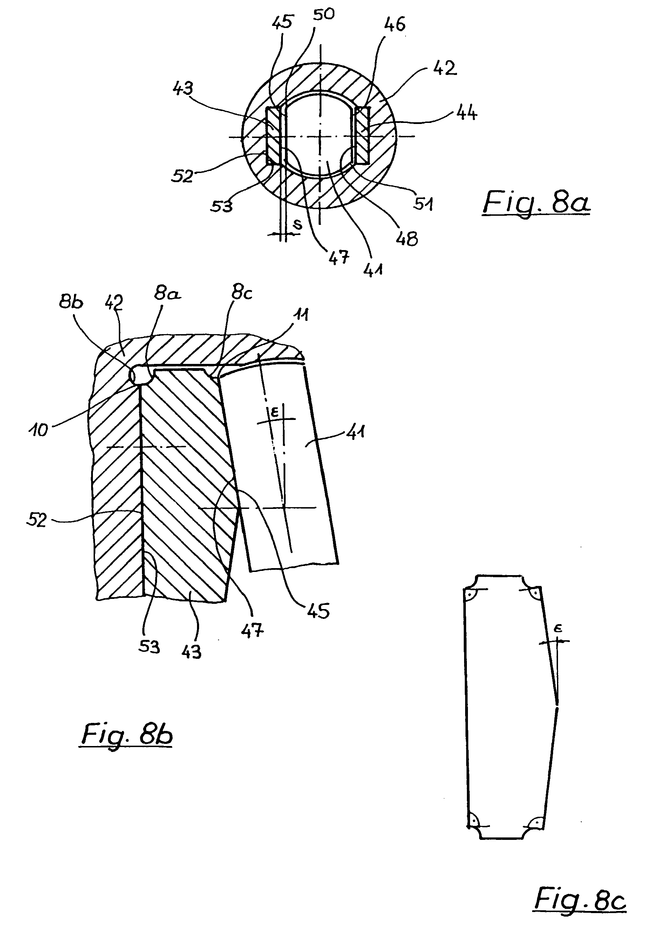

Die Konzeptionszeichnung nach Fig. 8a zeigt am Beispiel eines Walzwerksantriebes für eine Arbeitswalze im Querschnitt eine Antriebswelle mit einem Flachzapfen 41, der in eine zentrale Ausnehmung eines zylindrischen Treffers 42 ragt, der seinerseits mit zwei Innenleisten 43, 44 bestückt ist. Zwischen den Wangen 45, 46 des Flachzapfens 41 und den Stützflächen 47, 48 der Innenleisten ist ein Spiel s zum leichten axialen Zusammenfügen und Trennen der Bauteile des Antriebssystems vorgesehen. Beim Aufbringen des Antriebsmomentes und unter Last kommt es zu einem Verkanten des Flachzapfens zwischen den Innenleisten, sodass eine Linien- bzw. Punktberührung der Längskanten 50, 51 des Flachzapfens auf den Stützflächen 47, 48 der Innenleisten auftritt und damit eine hohe Flächenpressung und Spannungsspitzen in diesem Kontaktbereich der Bauteile auftreten. Das Spiel s verhindert ein flächiges Anliegen der Wangen 45, 46 des Flachzapfens an den Stützflächen 47, 48 der beiden Innenleisten.

Um eine Optimierung der Spannungsverhältnisse im Sinne einer Vergleichmäßigung der Flächenpressung im Verbindungselement zu erreichen, ist es, wie in Fig. 8b dargestellt, notwendig, die Kontaktfläche 52 am zylindrischen Treffer 42 und die gegenüber liegende Gegenkontaktfläche 53 an der Innenleiste 43 aufeinander abzustimmen, sodass eine gegenseitige Überdeckung dieser Flächen erreicht wird, und Freistellflächen 8a, 8b mit optimierter Kontur ausgehend von der Kante 10 festzulegen. Dies erfolgt, wie in den vorhergehenden Ausführungsbeispielen bereits beschrieben. Die Stützfläche 47 der Innenleiste 43 ist mit einer Neigung unter einem Winkel *ε* zur Vertikalen anzuordnen, der das vorbestimmten Spiel s zwischen der Innenleiste 43 und der Wange 45 im unbelasteten Zustand des Verbindungselementes ausgleicht und ein flächiges Anliegen der Wange an der Stützfläche der Innenleiste gewährleistet. Weiters sind, wie bei den vorhergehenden Ausführungsbeispielen, die Stützfläche 47 der Innenleiste 43 auf die Fläche der Wange 45 im Sinne gegenseitiger Überdeckung aufeinander abzustimmen und eine entsprechende Freistellfläche 8 c mit optimierter Kontur ausgehend von der Kante 11 auszubilden.

Bei wechselnder Drehrichtung und damit wechselnder Lastrichtung sind die Innenleisten entsprechend der Fig. 8c auszubilden.

Bei der Ausgestaltung einer erfindungsgemäßen Verbindung von Bauteilen kommt es beim Zusammenwirken von zwei Bauteilen oder von drei Bauteilen nicht darauf an, ob die Kontaktflächen und die Gegenkontaktflächen von ebenen Flächen oder von räumlich gekrümmten Flächen (vorzugsweise Zylinderflächen) gebildet werden und auch nicht auf die geometrische Form dieser Flächen (rechteckig, quadratisch, rund, kreisringförmig, oder ähnlich), sondern ausschließlich auf die vollständige Überdeckung und die Gestaltung der Freistellflächen, ausgehend von den Kanten der Kontaktfläche und Gegenkontaktfläche.

Bei allen exemplarisch beschriebenen Ausführungsformen kann eine zusätzliche Vergleichmäßigung der Flächenpressung und damit der Vergleichsspannungsverhältnisse über die Kontaktfläche und Gegenkontaktfläche durch eine bombierte Ausbildung mindestens einer der Kontaktfläche oder Gegenkontaktfläche erreicht werden.

## Patentansprüche

1. Verfahren zur Ausgestaltung einer Kontaktfläche (6, 6a, 6b) und einer Gegenkontaktfläche (7, 7a, 7b) eines Verbindungselementes, welches aus mindestens zwei Bauteilen zum Überleiten einer Drucklast von einem ersten Bauteil (1) in mindestens einen zweiten Bauteil (2, 2a, 2b) besteht wobei ein Überdeckungsbereich (5) einer geometrischen Stützfläche (3) eines ersten Bauteiles (1) und einer geometrischen Stützfläche (4, 4a, 4b) eines zweiten Bauteiles (2) als Kontaktfläche (6, 6a, 6b) des ersten Bauteiles und als Gegenkontaktfläche (7, 7a, 7b) des zweiten Bauteiles in ihrer geometrischen Ausdehnung definiert werden, **dadurch gekennzeichnet, dass** die Kontaktfläche und die Gegenkontaktfläche einander vollständig überdecken, dass ausgehend von allen Grenzen der definierten Kontaktfläche und Gegenkontaktfläche Freistellungen ausgebildet werden, wobei die die Kontaktfläche und die Gegenkontaktfläche überragende Bereiche der Stützflächen des ersten und des zweiten Bauteiles von der Kontaktfläche und der Gegenkontaktfläche räumlich abgesetzt werden.

2. Verfahren nach Anspruch 1, **dadurch gekennzeichnet, dass** die Freistellungen an der Kontaktfläche und der Gegenkontaktfläche von Freistellflächen (8, 8a, 8b, 8c, 8d, 8e, 8f, 8g, 8h) gebildet werden, die an der Berührungslinie mit der Kontaktfläche und der Gegenkontaktfläche jeweils etwa normal zu dieser verlaufen und zur verbleibenden Stützfläche eine Kerbe bilden.

3. Verfahren nach Anspruch 1 oder 2, **dadurch gekennzeichnet, dass** die Freistellungen mit einer Kontur ausgebildet werden, die im Querschnitt annähernd einen Abschnitt einer Ellipse bilden.

4. Verfahren nach Anspruch 1 oder 2, **dadurch gekennzeichnet, dass** die Freistellungen mit einer Kontur ausgebildet werden, die im Querschnitt annähernd einen Korbbogen bilden.

5. Verfahren nach einem der vorhergehenden Ansprüche, **dadurch gekennzeichnet, dass** bei einem von drei Bauteilen (1, 2a, 2b) bestehenden Verbindungselement entlang einer gemeinsamen Kontaktlinie (L) Freistellflächen (8a, 8b, 8c, 8d) ausgebildet werden, die einen geschlossenen torusförmigen Ringraum (16) oder einen im Querschnitt geschlossenen Freistellkanal (31) bilden, der in seiner Längserstreckung die Kontaktlinie (L) umschließt.

6. Verfahren nach einem der vorhergehenden Ansprüche, **dadurch gekennzeichnet, dass** mindestens eine der Kontaktfläche oder Gegenkontaktfläche mit einer Bombierung (24) versehen wird.

7. Verfahren nach Anspruch 6, **dadurch gekennzeichnet, dass** die Kontur der Bombierung (24) der Kontaktfläche oder der Gegenkontaktfläche in mindestens einem Querschnitt mit einer zumindest abschnittweise konvexen und stetig differenzierbaren Kurve ausgeformt wird.

8. Verfahren nach Anspruch 6 oder 7, **dadurch gekennzeichnet,** die Kontur der Bombierung (24) der Kontaktfläche oder Gegenkontaktfläche in mindestens einem Querschnitt aus mindestens zwei stetig differenzierbaren Kurvenabschnitten gebildet wird, von denen zumindest ein Kurvenabschnitt einen konvexen Kurvenverlauf aufweist und im Übergangspunkt benachbarter Kurvenabschnitte die stetige Differenzierbarkeit gegeben ist.

9. Verfahren nach Anspruch 6 oder 7, **dadurch gekennzeichnet, dass** die Kontur der Bombierung (24) der Kontaktfläche oder Gegenkontaktfläche von drei Kurvenabschnitten gebildet wird, wobei der mittlere Kurvenabschnitt von einer Geraden und die benachbarten Kurvenabschnitte von konvex gekrümmten Kurven gebildet werden.

10. Verfahren nach Anspruch 6 oder 7, **dadurch gekennzeichnet, dass** die Kontur der Bombierung (24) der Kontaktfläche oder Gegenkontaktfläche in mindestens einem Querschnitt mit einer Kurve mit doppelkonvexen, vorzugsweise symmetrischen Verlauf ausgestaltet wird.

11. Verfahren nach einem der vorhergehenden Ansprüche, **dadurch gekennzeichnet, dass** der erste Bauteil mit der Kontaktfläche und der zweiten Bauteil mit der Gegenkontaktfläche eine Schrumpfverbindung bilden.

12. Verfahren nach Anspruch 11, **dadurch gekennzeichnet, dass** der erste Bauteil von einer antreibbaren Welle und der zweite Bauteil von einem Drehmomente übertragenden Element, wie Nabe, Zahnrad, Reibrad oder Antriebsrad, gebildet wird.

13. Verfahren nach einem der vorhergehenden Ansprüche 1 bis 10, **dadurch gekennzeichnet, dass** der erste Bauteil von einem Walzgerüstständer (16) mit einer im Querhaupt mittig angeordneten Sacklochbohrung und der zweite Bauteil von einer in der Sacklochbohrung axial abgestützten Druckmutter (17) mit Gewindespindel gebildet wird.

14. Verbindungselement bestehend aus mindestens zwei Bauteilen zum Überleiten einer Drucklast von einem ersten Bauteil (1) in mindestens einen zweiten Bauteil (2), wobei der erste Bauteil eine Kontaktfläche (6, 6a, 6b) aufweist, die an einer Gegenkontaktfläche (7, 7a, 7b) des zweiten Bauteiles anliegt, hergestellt nach einem Verfahren gemäß einem der Ansprüche 1 bis 12, **dadurch gekennzeichnet, dass** Kontaktfläche und Gegenkontaktfläche einander vollständig überdecken, dass an allen Rändern der Kontaktfläche und der Gegenkontaktfläche Freistellungen (8, 8a, 8b, 8c, 8d, 8e, 8f, 8g, 8h) ansetzen.

15. Verbindungselement nach Anspruch 14, **dadurch gekennzeichnet, dass** die Freistellungen an der Kontaktfläche und der Gegenkontaktflächen von Freistellflächen (8, 8a, 8b, 8c, 8d, 8e, 8f) gebildet sind, die an der Berührungslinie mit der Kontaktfläche und der Gegenkontaktfläche jeweils etwa normal zu dieser stehen und bei räumlich gekrümmten Freistellflächen Kerben bilden.

16. Verbindungselement nach Anspruch 14 oder 15, **dadurch gekennzeichnet, dass** die Freistellfläche eine Kontur aufweist, die in einem Querschnitt annähernd von einem Abschnitt einer Ellipse gebildet ist.

17. Verbindungselement nach Anspruch 14 oder 15, **dadurch gekennzeichnet, dass** die Freistellfläche eine Kontur aufweist, die in einem Querschnitt annähernd von einem Korbbogen gebildet ist.

18. Verbindungselement nach einem der Ansprüche 14 bis 17, **dadurch gekennzeichnet, dass** bei einem von drei Bauteilen (1, 2a, 2b) bestehenden Verbindungselement entlang einer gemeinsamen Kontaktlinie (L) Freistellflächen (8a, 8b, 8c, 8d) angeordnet sind, die einen geschlossenen torusförmigen Ringraum (16) oder einen im Querschnitt geschlossenen Freistellkanal (31) bilden, der in seiner Längserstreckung die Kontaktlinie (L) umschließt.

19. Verbindungselement nach einem der Ansprüche 14 bis 18, **dadurch gekennzeichnet, dass** mindestens eine der Kontaktfläche und Gegenkontaktfläche eine Bombierung (24) aufweist.

20. Verbindungselement nach Anspruch 19, **dadurch gekennzeichnet, dass** die Kontur der Bombierung der Kontaktfläche oder Gegenkontaktfläche in mindestens einem Querschnitt von einer zumindest abschnittsweise konvexen und stetig differenzierbaren Kurve gebildet ist.

21. Verbindungselement nach Anspruch 19 oder 20, **dadurch gekennzeichnet, dass** die Kontur der Bombierung der Kontaktfläche oder Gegenkontaktfläche in mindestens einem Querschnitt aus mindestens zwei stetig differenzierbaren Kurvenabschnitten gebildet ist, von denen zumindest ein Kurvenabschnitt einen konvexen Kurvenverlauf aufweist und im Übergangspunkt benachbarter Kurvenabschnitte die stetige Differenzierbarkeit gegeben ist.

22. Verbindungselement nach Anspruch 19 oder 20, **dadurch gekennzeichnet, dass** die Kontur der Bombierung der Kontaktfläche oder Gegenkontaktfläche von drei Kurvenabschnitten gebildet ist, wobei der mittlere Kurvenabschnitt von einer Geraden und die benachbarten Kurvenabschnitte von konvex gekrümmten Kurven gebildet sind.

23. Verbindungselement nach Anspruch 19 oder 20, **dadurch gekennzeichnet, dass** die Kontur der Bombierung der Kontaktfläche oder Gegenkontaktfläche in mindestens einem Querschnitt von einer Kurve mit doppelkovexen, vorzugsweise symmetrischen Verlauf gebildet ist.

24. Verbindungselement nach einem der vorhergehenden Ansprüche 14 bis 23, **dadurch gekennzeichnet, dass** der der erste Bauteil mit der Kontaktfläche und der zweiten Bauteil mit der Gegenkontaktfläche eine Schrumpfverbindung bilden.

25. Verbindungselement nach Anspruch 24, **dadurch gekennzeichnet, dass** der erste Bauteil von einer antreibbaren Welle und der zweite Bauteil von einem Drehmomente übetragenden Element, wie Nabe, Zahnrad, Reibrad Antriebsrad etc. gebildet ist.

26. Verbindungselement nach einem der vorhergehenden Ansprüche 14 bis 23, **dadurch gekennzeichnet, dass** der erste Bauteil von einem Walzgerüstständer (16) mit einer im Querhaupt mittig angeordneten Sacklochbohrung (18) und der zweite Bauteil von einer in der Sacklochbohrung axial abgestützten Druckmutter (17) mit Gewindespindel gebildet ist.

## Claims

1. Method for shaping a contact surface (6, 6a, 6b) and a countercontact surface (7, 7a, 7b) of an assembling element which consists of at least two components for transferring a pressure load from a first component (1) into at least one second component (2, 2a, 2b), an overlap region (5) of a geometric supporting surface (3) of a first component (1) and of a geometric supporting surface (4, 4a, 4b) of a second component (2) being defined as a contact surface (6, 6a, 6b) of the first component and as a countercontact surface (7, 7a, 7b) of the second component in terms of their geometric extent, **characterized in that** the contact surface and the countercontact surface overlap one another completely, and **in that** clearances are formed, starting from all the limits of the defined contact surface and countercontact surface, those regions of the supporting surfaces of the first and of the second component which project beyond the contact surface and the countercontact surface being spatially offset from the contact surface and the countercontact surface.

2. Method according to Claim 1, **characterized in that** the clearances on the contact surface and the countercontact surface are formed by clearance surfaces (8, 8a, 8b, 8c, 8d, 8e, 8f, 8g, 8h) which at the tangent line with the contact surface and the countercontact surface run in each case approximately perpendicularly with respect to this and with respect to the remaining supporting surface form a notch.

3. Method according to Claim 1 or 2, **characterized in that** the clearances are designed with a contour which in cross section form approximately a segment of an ellipse.

4. Method according to Claim 1 or 2, **characterized in that** the clearances are designed with a contour which in cross section form approximately a three-center curve.

5. Method according to one of the preceding claims, **characterized in that**, in the case of an assembling element consisting of three components (1, 2a, 2b), clearance surfaces (8a, 8b, 8c, 8d) are formed along a common contact line (L), which form a closed toroidal annular space (16) or a clearance channel (31) of closed cross section which in its longitudinal extent surrounds the contact line (L).

6. Method according to one of the preceding claims, **characterized in that** at least one of the contact surface or countercontact surface is provided with a camber (24).

7. Method according to Claim 6, **characterized in that** the contour of the camber (24) of the contact surface or of the countercontact surface is shaped in at least one cross section with an at least partially convex and continuously differentiatable curve.

8. Method according to Claim 6 or 7, **characterized in that** the contour of the camber (24) of the contact surface or countercontact surface is formed in at least one cross section from at least two continuously differentiatable curve segments, of which at least one curve segment has a convex curve profile, the continuous differentiatability being afforded at the transition point of adjacent curve segments.

9. Method according to Claim 6 or 7, **characterized in that** the contour of the camber (24) of the contact surface or countercontact surface is formed by three curve segments, the middle curve segment being formed by a straight line and the adjacent curve segments being formed by convexly curved curves.

10. Method according to Claim 6 or 7, **characterized in that** the contour of the camber (24) of the contact surface or countercontact surface is shaped in at least one cross section with a curve having a double-convex, preferably symmetrical profile.

11. Method according to one of the preceding claims, **characterized in that** the first component forms with the contact surface and the second component with the countercontact surface a shrink assembly.

12. Method according to Claim 11, **characterized in that** the first component is formed by a driveable shaft and the second component is formed by a torque-transmitting element, such as a hub, gearwheel, friction wheel or driving wheel.

13. Method according to one of the preceding Claims 1 to 10, **characterized in that** the first component is formed by a roll stand column (16) with a blind hole bore arranged centrally in the crosshead, and the second component is formed by a pressure nut (17) with threaded spindle supported axially in the blind hole bore.

14. Assembling element, consisting of at least two components for transferring a pressure load from a first component (1) into at least one second component (2), the first component having a contact surface (6, 6a, 6b) which bears against a countercontact surface (7, 7a, 7b) of the second component, produced by a method according to one of Claims 1 to 12, **characterized in that** the contact surface and countercontact surface overlap one another completely, and **in that** clearances (8, 8a, 8b, 8c, 8d, 8e, 8f, 8g, 8h) start at all the margins of the contact surface and of the countercontact surface.

15. Assembling element according to Claim 14, **characterized in that** the clearances on the contact surface and the countercontact surfaces are formed by clearance surfaces (8, 8a, 8b, 8c, 8d, 8e, 8f) which at the tangent line with the contact surface and the countercontact surface are in each case approximately perpendicular with respect to this and in the case of spatially curved clearance surfaces form notches.

16. Assembling element according to Claim 14 or 15, **characterized in that** the clearance surface has a contour which is formed in one cross section approximately by a segment of an ellipse.

17. Assembling element according to Claim 14 or 15, **characterized in that** the clearance surface has a contour which is formed in one cross section approximately by a three-center curve.

18. Assembling element according to one of Claims 14 to 17, **characterized in that**, in the case of an assembling element consisting of three components (1, 2a, 2b), clearance surfaces (8a, 8b, 8c, 8d) are arranged along a common contact line (L), which form a closed toroidal annular space (16) or a clearance channel (31) of closed cross section which in its longitudinal extent surrounds the contact line (L).

19. Assembling element according to one of Claims 14 to 18, **characterized in that** at least one of the contact surface and countercontact surface has a camber (24).

20. Assembling element according to Claim 19, **characterized in that** the contour of the camber of the contact surface or countercontact surface is formed in at least one cross section by an at least partially convex and continuously differentiatable curve.

21. Assembling element according to Claim 19 or 20, **characterized in that** the contour of the camber of the contact surface or countercontact surface is formed in at least one cross section from at least two continuously differentiatable curve segments, of which at least one curve segment has a convex curve profile, the continuous differentiatability being afforded at the transition point of adjacent curve segments.

22. Assembling element according to Claim 19 or 20, **characterized in that** the contour of the camber of the contact surface or countercontact surface is formed by three curve segments, the middle curve segment being formed by a straight line and the adjacent curve segments being formed by convexly curved curves.

23. Assembling element according to Claim 19 or 20, **characterized in that** the contour of the camber of the contact surface or countercontact surface is formed in at least one cross section by a curve having a double-convex, preferably symmetrical profile.

24. Assembling element according to one of the preceding Claims 14 to 23, **characterized in that** the first component forms with the contact surface and the second component with the countercontact surface a shrink assembly.

25. Assembling element according to Claim 24, **characterized in that** the first component is formed by a driveable shaft and the second component is formed by a torque-transmitting element, such as a hub, gearwheel, friction wheel, driving wheel, etc.

26. Assembling element according to one of the preceding Claims 14 to 23, **characterized in that** the first component is formed by a roll stand column (16) with a blind hole bore (18) arranged centrally in the crosshead, and the second component is formed by a pressure nut (17) with threaded spindle supported axially in the blind hole bore.

## Revendications

1. Procédé pour la configuration d'une surface de contact (6, 6a, 6b) et d'une surface de contre-contact (7, 7a, 7b) d'un élément de liaison, lequel se compose d'au moins deux éléments pour le transfert d'une charge de pression d'un premier élément (1) dans au moins un deuxième élément (2, 2a, 2b), dans lequel une zone de recouvrement (5) d'une surface d'appui géométrique (3) d'un premier élément (1) et d'une surface d'appui géométrique (4, 4a, 4b) d'un deuxième élément (2) sont définies comme surface de contact (6, 6a, 6b) du premier élément et comme surface de contre-contact (7, 7a, 7b) du deuxième élément dans leur étendue géométrique, **caractérisé en ce que** la surface de contact et la surface de contre-contact se recouvrent intégralement, **en ce que** des dégagements sont constitués au départ de l'ensemble des limites de la surface de contact et de la surface de contre-contact définie, dans lequel les zones des surfaces d'appui surplombant la surface de contact et la surface de contre-contact du premier et du deuxième élément sont spatialement décalées de la surface de contact et de la surface de contre-contact.

2. Procédé selon la revendication 1, **caractérisé en ce que** les dégagements sont constitués sur la surface de contact et la surface de contre-contact de surfaces de dégagement (8, 8a, 8b, 8c, 8d, 8e, 8f, 8g, 8h), lesquelles s'étendent respectivement normalement par rapport à la surface de contact et la surface de contre-contact sur la ligne de contact et constituent une encoche par rapport à la surface d'appui résiduelle.

3. Procédé selon la revendication 1 ou 2, **caractérisé en ce que** les dégagements sont constitués avec un contour dont la section s'approche d'une partie d'ellipse.

4. Procédé selon la revendication 1 ou 2, **caractérisé en ce que** les dégagements sont constitués avec un contour dont la section s'approche d'un arc en anse de panier.

5. Procédé selon l'une des revendications précédentes, **caractérisé en ce que** des surfaces de dégagement (8a, 8b, 8c, 8d) constituant un espace annulaire (16) toroïdal fermé ou un canal de dégagement (31) de section fermée englobant la ligne de contact (L) dans son étendue longitudinale sont constituées le long d'une ligne de contact (L) commune pour l'élément de liaison en ce qui concerne l'un des trois éléments (1, 2a, 2b).

6. Procédé selon l'une des revendications précédentes, **caractérisé en ce qu'**au moins une des surfaces de contact ou de contre-contact est dotée d'un bombement (24).

7. Procédé selon la revendication 6, **caractérisé en ce que** le contour du bombement (24) de la surface de contact ou de la surface de contre-contact est formé selon au moins une section avec une courbe au moins par passages convexe et continuellement différentiable.

8. Procédé selon la revendication 6 ou 7, **caractérisé en ce que** le contour du bombement (24) de la surface de contact ou de la surface de contre-contact est constitué selon au moins une section d'au moins deux sections de courbe continuellement différentiables, dont au moins une section de courbe présente un tracé convexe et dans lequel la différentiabilité continue est donnée au point de transition de sections de courbe voisines.

9. Procédé selon la revendication 6 ou 7, **caractérisé en ce que** le contour du bombement (24) de la surface de contact ou de la surface de contre-contact est constitué par trois sections de courbe, dans lequel la section de courbe médiane est constituée par une droite et les sections de courbe voisines par des courbes convexes.

10. Procédé selon la revendication 6 ou 7, **caractérisé en ce que** le contour du bombement (24) de la surface de contact ou de la surface de contre-contact est doté d'une courbe doublement convexe et de préférence symétrique selon au moins une section.

11. Procédé selon l'une des revendications précédentes, **caractérisé en ce que** le premier élément constitue une liaison rétractable avec la surface de contact et le deuxième élément constitue une liaison rétractable avec la surface de contre-contact.

12. Procédé selon la revendication 11, **caractérisé en ce que** le premier élément est constitué par un arbre actionnable et le deuxième élément par un élément transmetteur de couples comme un moyeu, une roue dentée, une roue de friction ou une roue motrice.

13. Procédé selon l'une des revendications précédentes 1 à 10, **caractérisé en ce que** le premier élément est constitué par un support de cage de laminoir (16) avec un alésage à trou borgne situé au milieu dans le fronton et le deuxième élément par un écrou de retenue (17) avec vis filetée appuyé axialement dans l'alésage à trou borgne.

14. Élément de liaison composé d'au moins deux éléments pour le transfert d'une charge de pression d'un premier élément (1) vers au moins un deuxième élément (2), dans lequel le premier élément présente une surface de contact (6, 6a, 6b) adjacente à une surface de contre-contact (7, 7a, 7b) du deuxième élément, fabriqué conformément à un procédé selon l'une des revendications 1 à 12, **caractérisé en ce que** la surface de contact et la surface de contre-contact se recouvrent intégralement, **en ce que** des dégagements (8, 8a, 8b, 8c, 8d, 8e, 8f, 8g, 8h) sont constitués sur l'ensemble des bords de la surface de contact et de la surface de contre-contact.

15. Élément de liaison selon la revendication 14, **caractérisé en ce que** les dégagements sont constitués sur la surface de contact et la surface de contre-contact de surfaces de dégagement (8, 8a, 8b, 8c, 8d, 8e, 8f), lesquelles s'étendent respectivement normalement par rapport à la surface de contact et la surface de contre-contact sur la ligne de contact et constituent des encoches au niveau des surfaces de dégagement courbées dans l'espace.

16. Élément de liaison selon la revendication 14 ou 15, **caractérisé en ce que** la surface de dégagement présente un contour dont une section s'approche de la section d'une ellipse.

17. Élément de liaison selon la revendication 14 ou 15, **caractérisé en ce que** la surface de dégagement présente un contour dont une section s'approche d'un arc en anse de panier.

18. Élément de liaison selon l'une des revendications 14 à 17, **caractérisé en ce que** des surfaces de dégagement (8a, 8b, 8c, 8d) constituant un espace annulaire (16) toroïdal fermé ou un canal de dégagement (31) de section fermée englobant la ligne de contact (L) dans son étendue longitudinale sont constituées le long d'une ligne de contact (L) commune pour l'élément de liaison en ce qui concerne l'un des trois éléments (1, 2a, 2b).

19. Élément de liaison selon l'une des revendications 14 à 18, **caractérisé en ce qu'**au moins une parmi la surface de contact et la surface de contre-contact présente un bombement (24).

20. Élément de liaison selon la revendication 19, **caractérisé en ce que** le contour du bombement de la surface de contact ou de la surface de contre-contact est formé selon au moins une section avec une courbe au moins par passages convexe et continuellement différentiable.

21. Élément de liaison selon la revendication 19 ou 20, **caractérisé en ce que** le contour du bombement de la surface de contact ou de la surface de contre-contact est constitué selon au moins une section d'au moins deux sections de courbe continuellement différentiables, dont au moins une section de courbe présente un tracé convexe et dans lequel la différentiabilité continue est donnée au point de transition de sections de courbe voisines.

22. Élément de liaison selon la revendication 19 ou 20, **caractérisé en ce que** le contour du bombement de la surface de contact ou de la surface de contre-contact est constitué par trois sections de courbe, dans lequel la section de courbe médiane est constituée par une droite et les sections de courbe voisines par des courbes convexes.

23. Élément de liaison selon la revendication 19 ou 20, **caractérisé en ce que** le contour du bombement de la surface de contact ou de la surface de contre-contact est constitué d'une courbe doublement convexe et de préférence symétrique selon au moins une section.

24. Élément de liaison selon l'une des revendications précédentes 14 à 23, **caractérisé en ce que** le premier élément constitue une liaison rétractable avec la surface de contact et le deuxième élément constitue une liaison rétractable avec la surface de contre-contact.

25. Élément de liaison selon la revendication 24, **caractérisé en ce que** le premier élément est constitué par un arbre actionnable et le deuxième élément par un élément transmetteur de couples comme un moyeu, une roue dentée, une roue de friction, une roue motrice, etc.

26. Élément de liaison selon l'une des revendications 14 à 23, **caractérisé en ce que** le premier élément est constitué par un support de cage de laminoir (16) avec un alésage à trou borgne (18) situé au milieu dans le fronton et le deuxième élément par un écrou de retenue (17) avec vis filetée appuyé axialement dans l'alésage à trou borgne.
